# EUROPEAN PATENT APPLICATION

(11) **EP 1 524 578 A1**
(43) Date of publication of application: **20.04.2005**
(21) Application number: 03023605.3
(22) Date of filing: 16.10.2003
(51) Int. Cl.: G05G 1/08, G05G 9/04

(54) **Haptic input device for generating control information**

(71) Applicant: Sony International (Europe) GmbH, 10785 Berlin (DE)
(72) Inventor: Michelitsch, Georg, Sony Int. (Europe) GmbH, 70327 Stuttgart (DE)
(74) Representative: Hössle Kudlek & Partner

(57) **Abstract**

A haptic input device for generating control information in order to control a device (50) connectable with the input device comprises an input element (1) which is able to assume at least two predetermined different shapes for at least two modes, wherein the input element (1) is in each mode actuable in order to generate an input signal, and a control unit (40) for generating a control information for the device (50) to be controlled, wherein the control information is based on the input signal received from the input element (1) and further depends on the actual mode of the input element (1).

## Description

The present invention relates to a haptic input device for generating control information in order to control a device. Further, the present invention relates to a method for controlling a device.

Input devices with one or a plurality of actuable input elements for generating control information in order to control electronical devices are widely known. Switches, keypads and rotary dials for example are available in different configurations and are used to select specific functions or to control selected run or operating parameters of a device to be controlled.

In the simplest version, each operating parameter of the device to be controlled can be changed by the actuation of a specific input element assigned to this parameter. Accordingly, the number of necessary input elements increases with the number of functions and parameters which can be controlled. In order to avoid this problem, so-called soft-keys are known which can be used to control a plurality of operating parameters of a device. The status of a soft-key can be changed between several available modes wherein in each mode one specific parameter can be controlled by an actuation of the input element. Since the main advantage of these soft-keys is the reduced number of required input elements, they are preferably used in devices which should have a reduced size, e.g. mobile telephones or the like.

In order to allow a user of a soft-key to control or change a desired operating parameter, additional information must be provided which informs on the actual status or mode of the input element, i.e., which allows to identify the parameter that could be actually controlled by the input element. In the above-mentioned example of a portable telephone, the soft-key is usually arranged right below a display wherein the actual status of the soft-key is shown in the lower-most line of the display. In this solution, the user has to look at the display each time he wants to use the soft-key.

The effectiveness of the above-mentioned concept of a soft-key could be improved if the user would get somehow an information on the actual status of the input element without the need of watching a display or the like. Although audio information could be used to overcome this problem, it would be better to provide a kind of tactile feedback to the user. This makes haptic techniques an interesting choice for realising an input device.

The term "haptics" has been used for years by researchers in human psychophysics who study how people use their hands and fingers to sense and manipulate objects. Recently, the term "haptic interfaces" has begun to be used by human interface technologists to describe devices that measure the motions of, and stimulate the sensory capabilities within, our hands. Such haptic interfaces offer the great advantage that a user - at the same time while he is manipulating the input device - obtains some output by way of a tactile or kinesthetic feedback. This "feel" allows to generate an intuitive link between manipulations of the input element and actions been induced by the manipulations. Furthermore, this feedback could provide the above-mentioned required information which informs the user on the actual status or mode of the input element without watching a display.

Up to now, haptic interfaces or input devices are very rare. Typically, they are of the so-called single-contact-point type. The position of the tip of a robotic arm is measured and compared with a virtual geometric world in order to calculate whether the tip of this robotic arm has penetrated any virtual objects. If so, a repulsive force is calculated based on a penetration depth which allows a user to experience these forces. An example of a haptic interface as described above is the so-called PHANToM device which is distributed by the company SensAble Technologies Inc.

The workspace of these devices of the single-contact-point type is typically designed to match the natural range of movement by a human's arm. These include movements of the whole arm, the forearm and the wrist. However, up to now no haptic devices are known that work according to the above principle but are small enough to fit inside a user's hand yet allow all fingers of the hand to interact fully with the device.

Another known haptic device is the so-called haptic glove which can both measure the finger movements and exert forces to the finger. These devices are typically of the exoskeleton type which have to be worn like a glove.

Yet another category of haptic devices - the usually called haptic or tactile displays - use a large array of uniform actuators that move along one axis. As a result, shapes can be generated by selectively moving these actuators like painting a picture on a computer screen through selectively switching on and off pixels on said screen. However, since all actuators move along the same direction, such a device cannot assume arbitrary shapes. In addition, almost all devices of this kind have been described as display-only devices and were not intended to function as an input device as well.

A further category of haptic devices uses a pool of a magneto-rheological or MR liquid that can create the illusion of shape changes to the user. Parts of the liquid can be made to change from a liquid state to a gel-like state by applying a magnetic field to that array. The technical realisation of such a device requires the user to wear a protective glove when he immerses his hand into the pool of MR liquid and feel the shape of virtual objects changing. Again, such a system is only used as a display device.

All haptic devices mentioned above can be made to simulate certain properties of natural material such as rubber, metal or wood, through a certain combination of parameters chosen for their reaction force that opposes the user's hand motion. These include viscosity (force proportional to the speed) softness (force proportional to the penetration depth) and friction. However, no haptic device has been used to exploit these features in order to provide a more intuitive user interface. The techniques required for such effects are generally used for virtual reality or training purpose where they are used to enhance the realism of interacting with virtually created worlds.

Tangible user interface devices however, can assume only one shape which indicates what kind of operation the user can perform with this device. The association between the shape and the function is usually a result of cultural knowledge and experience which the designer of such a device exploits in order to make using such a device more intuitive. The disadvantage of such an approach is - as already mentioned above - the potentially large number of different tangible devices the user has to collect and use as appropriate.

Accordingly, it is an object of the present invention to provide a haptic input device which allows the user to benefit from the intuitiveness of tangible user interface devices but allows to deal with only one input element.

In accordance with the present invention, there is provided a haptic input device for generating control information in order to control a device connectable with the input device wherein said input device comprises:
- an input element which is able to assume at least two predetermined different shapes for at least two modes, wherein the input element is in each mode actuable in order to generate an input signal, and
- a control unit for generating a control information for the device to be controlled, wherein the control information is based on the input signal received from the input element and further depends on the actual mode of the input element.

Similar to a soft-key, the input device according to the present invention can be used to control a plurality of different operating or run parameters of the device to be controlled. However, the input element itself provides now a tangible information on its actual status or mode by assuming different shapes that represent the parameters which can be actually controlled. Thus, a user does not have to watch an additional display or to listen to audio information but is instantly informed on the mode of the input device. The control information in order to control or change a desired operating parameter of the device which is connected with the input device according to the present invention can therefore be generated in a very convenient way.

According to a preferred embodiment of the present invention, the input element itself can be manipulated - preferably squeezed - by the user in order to initiate a transition into a new mode and shape, i.e., in order to select a new operating parameter to be controlled. Although it would be also possible to provide an additional button which has to be actuated in order to change the mode of the input element, the embodiment wherein the input element itself can be manipulated in order to change the mode is preferred since an additional key is not necessary.

The shape-changing feature of the input element could be realized by providing at least one actuator unit within said input element wherein the actuator unit contains one actuator for defining an alterable surface point of the input element and further means for sensing an external force applied to the surface. Preferably, the input element comprises a plurality of actuator units that can - in combination - provide arbitrary shapes of the input device and sense nearly any external force applied to the input element in order to initiate a shape transformation. The means for sensing an external force could for example comprise position sensors, pressure sensors or accelerometers. Additionally, an appropriate control of the actuators allows the user to experience different kind of feedback forces when manipulating the input element.

In accordance with another preferred embodiment of the present invention, the input element exerts - in at least one of the predetermined modes/shapes - during an actuation in order to generate an input signal a feedback force. This feedback force could indicate a neutral value of the parameter to be controlled or could also indicate a plurality of selectable values.

The present invention also relates to a method of generating control information used to control a device by means of a haptic input device comprising an input element wherein said method comprises the steps of:
a) manipulating said input element in order to cause the input element to assume one of at least two predetermined shapes wherein each shape is assigned to a specific operating parameter of the device to be controlled,
b) actuating the input element in order to generate a control information for controlling the parameter assigned to the actual shape of the input element.

In the following, the present invention is explained in more detail by means of a preferred embodiment shown in the enclosed drawings, in which:
- Figs. 1a to 1d: show an input element of a haptic input device in accordance with the present invention wherein the input element assumes four different shapes belonging to four different input modes;
- Fig. 2: shows a first example of a shape transition of the input element initiated by a manipulation of the user;
- Fig. 3: shows a second embodiment of a shape transition of the input element;
- Fig. 4: shows a flow diagram of the algorithm for a shape change of the input element;
- Fig. 5: shows a frontal view of a schematic assembly for a haptic rotary dial;
- Fig. 6: shows a perspective view of a schematic assembly of a haptic shape-changing device, that can be moved on a flat surface similar to a computer mouse; and
- Fig. 7: shows a block diagram of a preferred embodiment of a haptic input device in accordance with the present invention.

The following description is intended to explain the general workings of a haptic input device in the form of a rotary dial used to control a car radio. However, the invention should not be limited to this example and could be expanded to a plurality of other possible applications and preferable embodiments.

A car radio usually offers (at least) the following features: volume control, tuning into radio stations and adjustable bass and treble levels. The present invention provides a user interface with one input element in the form of a rotary dial which can be rotated in order to change values of a selected operating parameter of the radio and further manipulated - in particular squeezed - in order to change the shape of the input element and the mode of the input device. The user will be able to shape the input element into four different shapes, one for volume control, one for tuning control, one for bass control and one for treble control. For each distinct shape the rotation of the rotary dial results in a different action which is readily understood by the user due to the difference in shape. As a result, the user is able to operate the car radio without having to look at the dashboard or a display since he can feel the shape of the rotary dial in his hand and immediately knows what mode is being engaged.

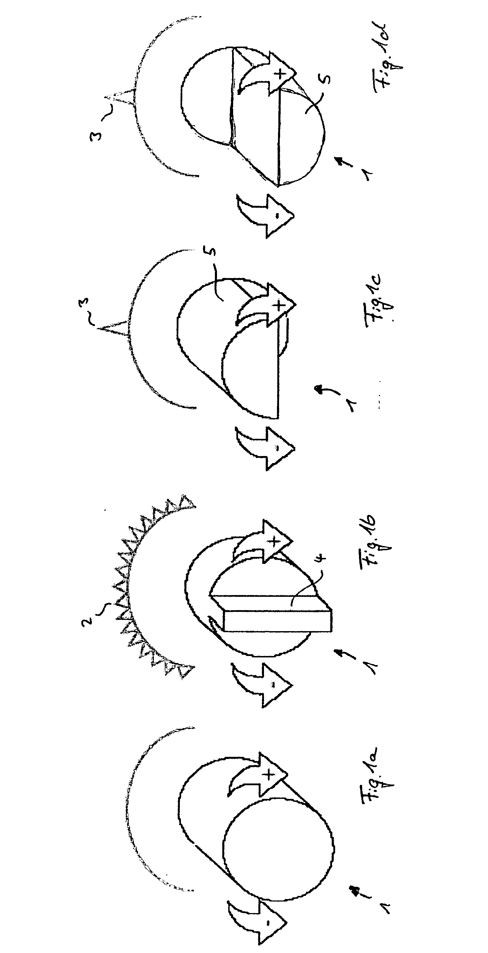

Figs. 1a to 1d show an example of a rotary dial 1 used for selecting values from a different range. The four drawings show one shape for volume control (Fig. 1a), one for selecting preset radio stations for a radio tuner (Fig. 1b), a third one for controlling the treble (Fig. 1c) and a fourth one as a bass control element being similar to the treble control element but having the semi-cylindrical shaped part located at the bottom (Fig. 1d).

Instead of providing four different shaped input elements, the input element 1 of the haptic input device according to the present invention can assume any of these predetermined shapes. With each shape change comes a different force feedback effect associated with the rotation used to select a value as indicated in Figs. 1a to 1d. In particular, for the volume control mode of Fig. 1a an artificial damping effect would be beneficial. In case of the station selection mode shown in Fig. 1b however, single force steps 2 that indicate each preset station can be felt as clicks by a user. For the treble control case as well as for the bass control case shown in Figs. 1c and 1d, a centering force 3 at the neutral position (essentially one slightly larger force step) helps the user in finding the neutral position. Additionally, for the station selector as well as for the treble/bass control shapes the amount of rotation allowed is limited to less than 180 degrees. This ensures that the distinct shape and orientation of the control rotary dial 1 for the mode in question remains easily recognisable by the user.

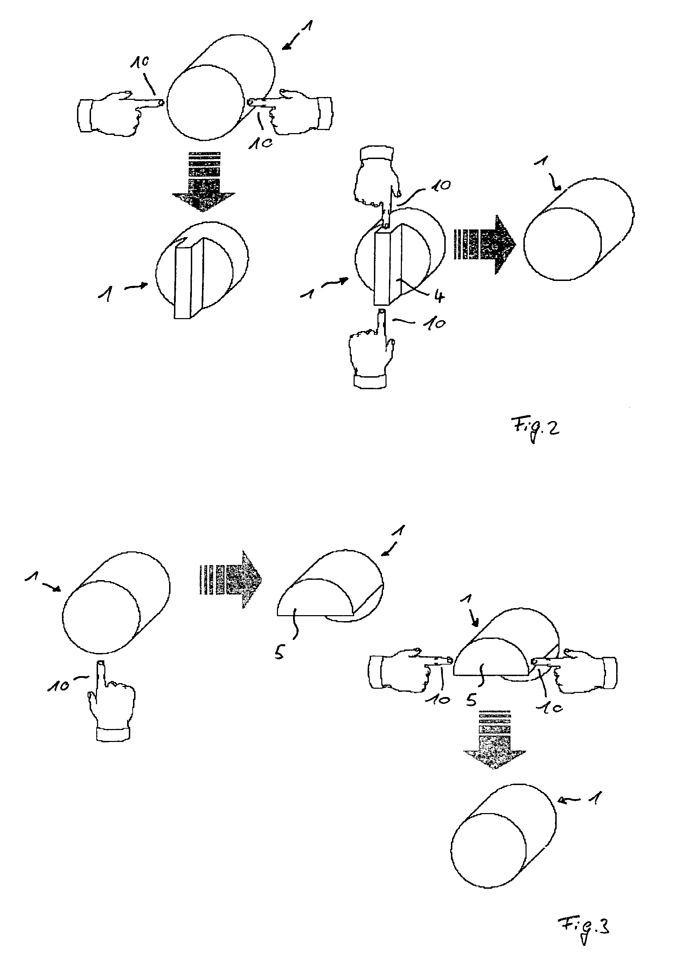

As already mentioned, it would be possible to provide an additional input or control element used to select a specific mode or shape of the rotary dial 1. However, in accordance with a preferred embodiment of the present invention, the transition from one mode to another mode is initiated by the user through force or pressure applied to the surface of the input element 1. As shown in Fig. 2, applying a defined force on certain areas of the surface of the input element 1 starts a process of shrinking certain areas of the surface of the rotary dial 1 until it reaches its new transformed shape. As e.g. shown in Fig. 2, a transition from the volume control mode of Fig. 1a into the station tuning mode of Fig. 1b could be initiated by pressing on the opposite sides of the outer surface of the rotary dial 1. This causes the input element 1 to change its shape into the shape being allocated to the station tuning mode. If the user however wants to go back to the volume control mode, he has to apply pressure on both ends of the rib 4 in the front area of the rotary dial 1 during the station tuning mode.

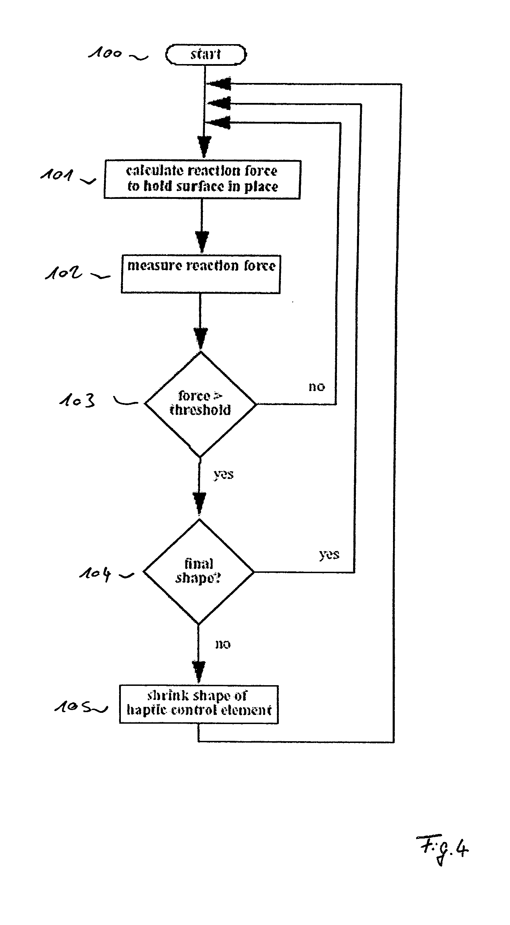

Fig. 3 shows the transition from the volume control mode to the treble control mode wherein the user has to apply pressure on the lower half of the cylindrical rotary dial 1. Again, in order to go back to the volume control mode, pressure has to be applied to the two opposing sides of the semi-cylinder 5.

Although Figs. 2 and 3 show that the user uses the fingers 10 of his both hands in order to squeeze the input element 1 into the new shape associated with the desired control mode, it is certainly also possible to use only one hand in order to manipulate the input element 1 and to select a new mode.

The exact position and force levels required for each transition is subject to usability studies. The pinch gestures indicated in Figs. 2 and 3 are examples based on intuition but are not necessarily meant to be the only or best ways of achieving the transformation of the input element's shape. It has to be noted that there are two types of gestures involved in the examples shown. One requires a pinch gesture pressing down on two opposing sides of the input element 1 (e.g. the transformation from volume control mode to tuning mode) the other one requires pushing only from one side (e.g. the transformation from volume mode to treble mode). One-side gestures require the input element to be grounded as would naturally be the case for a control knob or rotary dial attached to the control panel of a device. Symmetric pinch gestures however can also be used for devices which are not grounded such as a computer mouse.

In addition to the gestures shown in Figs. 2 and 3, gestures along the axis of the input element 1 would also be possible. In this case, pushing on an area on the front surface would start the process of retracting the specific portion of the control element associated with that area. E.g., pushing on the lower portion of the input element's 1 front side when it is in the volume control mode would initiate a transformation into the treble mode.

Furthermore, pushing on the front side of the control element could also result in the front side being slightly dented in order to allow for a better resting place for the user's fingertip. For example, video control dials for selecting single frames from a video stream are known to be shaped in this way.

The one-sided gesture shown in Fig. 3 leads to a transformation into a shape which by the very nature of the shape's orientation gives an indication of the function that the input element performs. The upwards orientation of the semi-cylinder 5 reminds the user that he can adjust the high frequency range, i.e. the treble. A downwards orientation of the input element 1 however indicates that the lower frequency range (bass) will be effected by the user's input.

When the user switches from one mode to another, the system preferably transforms the shape of the input element 1 in such a way that the previously selected parameter value in the new mode is indicated by the shape. For instance, if the user changes from the volume mode of Fig. 1a to the station selection mode of Fig. 1b, then the orientation of the rotary dial 1 should reflect the station already selected by the user before. Therefore, the transformation as shown in Fig. 2 reflects only the case wherein the station selected was the one at the centre position. In all other cases the selector switch would point to the appropriate position, i.e., the rib 4 would be inclined compared to the vertical axis.

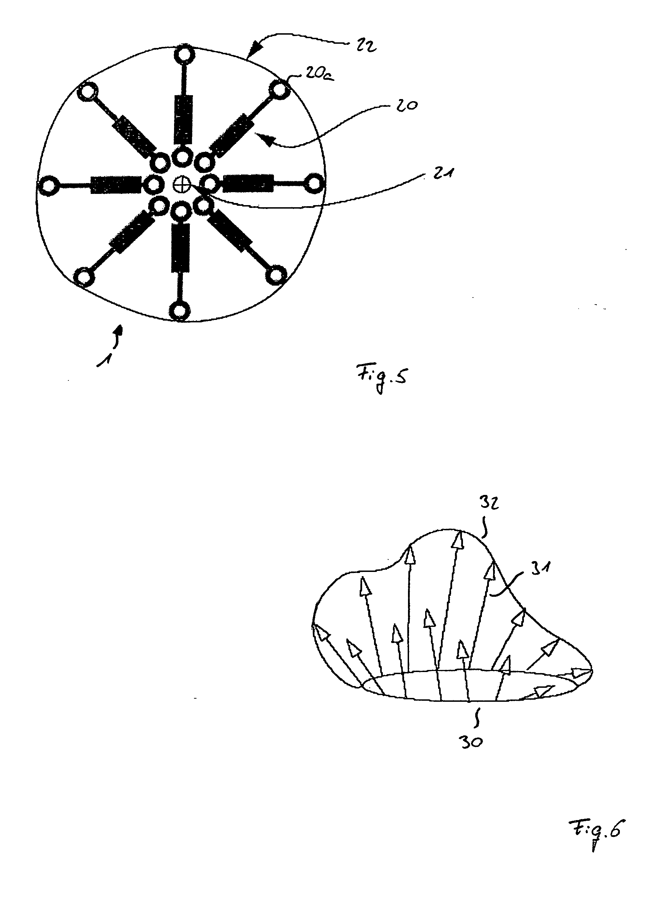

The transformation from one shape to another one has to be felt by the user as a haptic feedback mechanism confirming that the change is taking place in reaction to the pressure applied by the user's fingers 10. The following explanation with reference to Fig. 4 gives an example how this can be achieved.

As will be explain later in more detail, the input element 1 comprises means to measure the pressure applied to its surface by the fingers 10 of the user's hand wherein in certain cases a single sensor measuring pressure applied to the input element 1 as a whole, perpendicular to the rotation axis, might be sufficient. The means for measuring the applied pressure can be dedicated pressure sensors distributed on the surface of the input element 1 or a software solution that relies on a combination of actuators and position sensors. The position sensed and the power required by the actuators to hold the surface in place can be used to calculate the reaction force applied to the user's fingers 10.

As shown in the flow diagram of Fig. 4, a control unit calculates in step 101 a reaction force threshold for each of the surface points necessary to hold the surface of the input element 1 in place. In step 102, the reaction force counter-acting the pressure applied by the user's fingers 10 is determined and then compared to the threshold level obtained in step 101 (step 103). Once this threshold is overcome by the pressure of the user's fingers 10, the control unit calculates - in accordance with the direction of the force applied by the user - a new shape for the input element 1, which is slightly smaller than the previous one. In the next step 104 it is checked whether a final shape has been reached, i.e. whether the calculated new shape of the input element 1 is similar to one of the predetermined shapes assigned to the controlable parameters. If the answer is yes, the input element is transformed into the final shape considering the actual value of the new parameter to be controlled and the algorithm is started again. If however no final shape has been reached, the input element is shrunk and new reaction forces are calculated in step 101. This process is repeated until the final shape for the transformation has been reached.

The shrink factor used to calculate the new shape of the input element 1 can be linear over time which results in a sensation of squeezing a soft, non-elastic material such as polyurethane foam. However, the shrink factor could be also made to become larger over time as the user presses onto the surface wherein the resulting effect could be compared to a balloon being deflated by pressure where the opening in the balloon widens as the user presses down on it. In this way, different materials for the input element 1 could be simulated.

The kinds of actuators that can be used in order to generate the effects explained above include DC motors, ultrasonic motors, solenoids, shape memory alloys, cells filtered with MR fluids or the like. The claimed invention does not describe new kinds of actuators but a way to use these actuators in combination with sensors and the appropriate control software in order to achieve the shape changing effects which are claimed to improve the user interface of various systems.

The number and arrangement of the actuators needed to create a satisfactory haptic sensation of shape changing depends on the specific device and the number of different shapes it is intended to assume. In the most general form, an almost unlimited number of different shapes could be created and felt by the user. Fig. 5 shows a solution for the embodiment of a rotary dial wherein a plurality of DC electric motors as actuators 20 are arranged around the rotation axis 21 of the rotary dial 1. The length of each actuator 20 determines the position of a corresponding surface point 20a and the surrounding shape of the surface skin 22. All actuators 20 together define the shape of the whole input element 1.

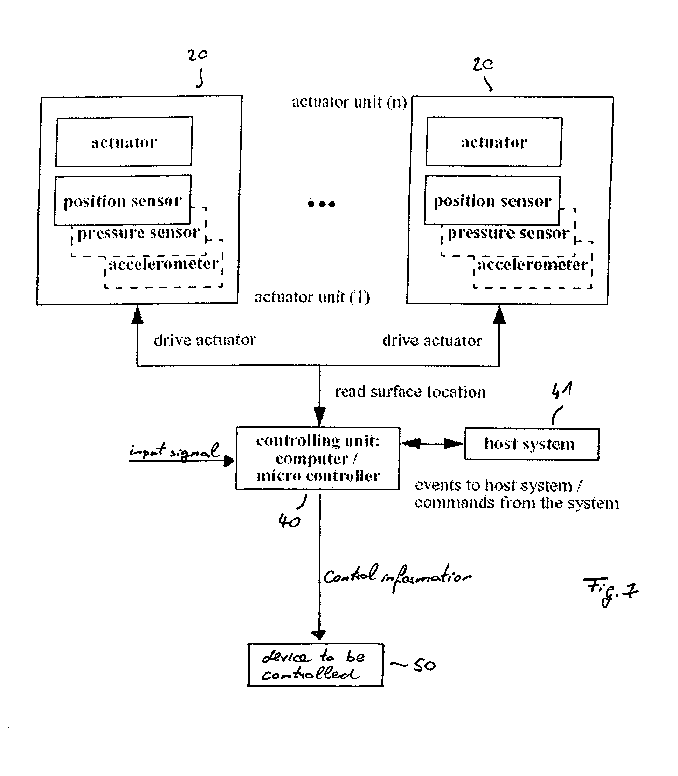

Fig. 6 shows a more general embodiment for a non-grounded, shape changing user interface input element 30 that could be moved on a flat surface like a computer mouse. Here, a plurality of actuators (symbolised by force vectors 31) are covered by a surface skin 32. By changing the end-position of each actuator 31, the surface skin 32 can assume a plurality of different shapes.

Other embodiments of the present invention include small gadget-like devices with embedded displays that are used in combination with other user interface devices such as electronic blackboards. The shape-changing aspect of such a device would be similar to the radio control rotary dial described with reference to Figs. 1 to 5 such that it indicates changes in mode and therefore the interpretation of the values to be changed. However, in contrast to the radio rotary dial which is assumed to be fixed to a dashboard, such a gadget would be moveable on the surface of a blackboard. As a result, the communication of changes in parameter values to the underlying black board could be achieved by two different means. Either by moving the gadget on the surface of the blackboard or by allowing the bottom surface of the gadget stick to the surface of the black board and let the top part of the gadget rotate relatively to the bottom part.

Fig. 7 finally shows a basic block diagram for a shape-changing haptic device in accordance with the present invention. The sensors included in the actuator units 20 which are in addition to the position sensor can be considered optional since the parameter values required by the control program - i.e. position and reaction force - can be computed from the position reading. It has to be noted that the actuators 20 and sensors do not need to be located in the same physical device as the control electronic 40. In particular, the computer program implementing the various haptic effects described could run on a computer or microcontroller, either embedded inside the device or running on a host computer (41) connected to the device via connections such as USB or other well-known interface technologies.

During operation, the control unit 40 is not only responsible for co-ordinating the function of the actuators 20 and generating the desired shape of the input element but also generates and transmits the control information finally used to control the device 50. The input signals received from and generated by an actuation of the input element are forwarded from the control unit 40 to the device 50 as control information that also takes into account the actual shape/mode of the input element. In the embodiment discussed with reference to Fig. 1 to 5, turning the rotary dial 1 would always result in similar input signals not depending on the actual mode of the input device. The control unit 40 however "knows" the actual mode and converts the input signals into corresponding control information for changing or controlling that operating parameter of the device 50 that is assigned to the actual mode.

The present invention therefore allows to control a plurality of different functions and operating parameters of a device in an extremely convenient way. In particular, a user can use and actuate the single input element without being impelled to watch the input element or an additional display.

The present invention can be applied in various areas of user interface technologies. In particular, whenever space is rare, the shape-changing aspect becomes important. In addition, due to the fact that the user can "grasp" the function to be applied because of the distinct shape exhibited by the device, the present invention is especially suited for application where the user cannot always confirm his actions by looking at a screen. These aspects are especially important for in-car applications and portable devices.

The present invention also promises to be useful as an additional modality to communicate state changes over time in content manipulated by the user such as video. Both the shape-changing aspect as well as the simulation of material properties can be used to convey underlying attribute values of content to the user in a way that does not interfere with other activities by the user. In particular, in case of video both the visual and the audio channels are typically occupied in order to present the actual content to the user. Meta-data embedded in the content could be displayed to the user's hand by changing the shape and/or by changing properties of simulated materials.

Possible applications for the present invention would be in-cars applications such as controlling non-driving related features of the car, home entertainment equipment, video editing equipment, universal remote controls, portable devices including PDAs, mobile phones and game consoles, video game controllers, tangible user interface gadgets for interaction with electronic blackboards, general purpose computer input-output devices or general household equipment.

Finally, it has to be mentioned that the above described embodiments could also be realised without a computer control component. In this case, the shape-changing feature could be realised by a combination of mechanical elements, such as springs, levers, switches, and so on. Although the flexibility of such an embodiment would be reduced in comparison with a computer controlled solution, the main advantages of the present invention could be also realised in this way.

## Claims

1. Haptic input device for generating control information in order to control a device (50) connectable with the input device,
said input device comprising
- an input element (1) which is able to assume at least two predetermined different shapes for at least two modes, wherein the input element (1) is in each mode actuable in order to generate an input signal,
- a control unit (40) for generating a control information for the device (50) to be controlled, wherein the control information is based on the input signal received from the input element (1) and further depends on the actual mode of the input element (1).

2. Haptic input device according to claim 1,
wherein said input element (1) is in each predetermined shape further manipulable in order to initiate a transition of the input element (1) into a new shape.

3. Haptic input device according to claim 2,
wherein the new shape is selected in accordance with the manipulation of the input element (1).

4. Haptic input device according to claim 2 or 3,
wherein the input element (1) has to be squeezed in order to initiate a transition into a new shape.

5. Haptic input device according to claim 4,
wherein said input element (1) comprises at least one actuator unit, said actuator unit containing one actuator (20) for defining an alterable surface point (20a) of the input element (1) and containing further means for sensing an external force applied to the surface (22) of the input element (1).

6. Haptic input device according claim 5,
wherein said means for sensing an external force comprise a position sensor.

7. Haptic input device according claim 5 or 6,
wherein said means for sensing an external force comprise a pressure sensor.

8. Haptic input device according to one of the claims 5 to 7,
wherein said means for sensing an external force comprise an accelerometer.

9. Haptic input device according to one of the claims 5 to 8,
wherein said input element (1) comprises a plurality of said actuator units.

10. Haptic input device according to one of the claims 5 to 9,
wherein the control unit (40) controls the function of the actuator unit(s).

11. Haptic input device according to one of the claims 1 to 10,
wherein said input element exerts - in at least one of the modes - during an actuation in order to generate an input signal a feedback force (2, 3).

12. Haptic input device according to claim 11,
wherein the feedback force provided by the input element (1) indicates a neutral value (3) of an operating parameter of the device (50) to be controlled.

13. Haptic input device according to claim 11,
wherein the feedback force provided by the input element (1) indicates a plurality of selectable values (2) of the operating parameter of the device (50) to be controlled.

14. Haptic input device according to on of the claims 1 to 13,
wherein said input element is a rotary dial (1).

15. Haptic input device according to on of the claims 1 to 13,
wherein said input element is a mouse-like input element (30) which is movable on a flat surface.

16. Method of generating control information used to control at least two operating parameters of a device (50) by means of a haptic input device comprising an input element (1), said method comprising the steps of:
a) manipulating said input element (1) in order to cause the input element (1) to assume one of at least two predetermined shapes wherein each shape is assigned to a specific operating parameter of the device (50) to be controlled,
b) actuating the input element (1) in order to generate a control information for controlling the parameter assigned to the actual shape of the input element.
